# FASCICULE DE BREVET EUROPEEN

(11) **EP 2 595 935 B1**
(45) Date de publication et mention de la délivrance du brevet: **02.04.2014**
(21) Numéro de dépôt: 11754706.7
(22) Date de dépôt: 20.07.2011
(51) Int. Cl.: C04B 7/32, C04B 7/345, C04B 28/02, C04B 28/06

(54) **CLINKER SULFO-BÉLITIQUE DOPÉ EN FER**
EISENDOTIERTER SULFOALUMINAT-BELIT-KLINKER
IRON-DOPED SULPHOALUMINATE-BELITE CLINKER

(30) Priorité: 21.07.2010 FR 1055926
(43) Date de publication de la demande: 29.05.2013
(73) Titulaire: Vicat, 92095 Paris La Défense (FR)
(72) Inventeur: BARNES-DAVIN, Laury, F-38500 Voiron (FR); MERIC, Pascal, F-38300 Bourgoin-jallieu (FR); PASQUIER, Michel, F-69006 Lyon (FR); BEAUVENT, Guy, F-62720 Wierre Effroy (FR)
(74) Mandataire: Verriest, Philippe
(86) Numéro de dépôt international: PCT/FR2011/051744
(87) Numéro de publication internationale: WO 2012/010800

(56) Documents cités:
- FR-A1- 2 940 274
- FR-A1- 2 940 275
- FR-A1- 2 941 448
- FR-A1- 2 941 449
- FR-A1- 2 941 450

## Description

La présente invention a pour objet un nouveau clinker sulfo-bélitique dopé en fer, un procédé de préparation de ce clinker, ainsi que l'utilisation du clinker pour la préparation de liant hydraulique et, par la suite, de coulis, béton ou mortier.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires. Comme ces familles ne sont pas totalement disjointes, il est préférable de les décrire par leurs constituants chimiques et minéralogiques.

Les ciments les plus répandus sont les ciments Portland. Les ciments Portland sont obtenus à partir de clinker Portland, obtenus après clinkérisation à une température de l'ordre de 1450°C d'un cru riche en carbonate de calcium dans un four.

La préparation de tels ciments présente le désavantage de dégager beaucoup de CO₂. L'industrie du ciment est donc aujourd'hui à la recherche d'une alternative valable au ciment Portland, c'est-à-dire des ciments présentant au moins les mêmes caractéristiques de résistance et de qualité que les ciments Portland, mais qui, lors de leur production, dégageraient moins de CO₂.

A ce titre, ces dernières années, les recherches se sont orientées vers les ciments dits sulfo-alumineux et sulfo-bélitiques, qui dégagent moins de CO₂ que les ciments Portland lors de leur production.

Le clinker étant le résultat d'une calcination à haute température, les éléments sont essentiellement présents sous forme d'oxydes. Les clinkers permettant la préparation de ciments sulfo-alumineux ou de ciments sulfo-bélitiques se rapportent à un procédé de fabrication d'un clinker à partir d'un cru constitué par un mélange comprenant les composés CaCO₃, Al₂O₃, et/ou Al(OH)₃ CaSO₄, SiO₂, Fe₂O₃ et/ou un produit contenant de la silice ou des silicates tel que l'argile, tous ces composés étant présents sous forme anhydre ou hydratée, individuellement ou en combinaison. Le cru peut être préparé avec toutes matières minérales naturelles ou synthétiques capables d'apporter du calcium, du silicium, du soufre, du fer et de l'aluminium.

Dans le cadre de ces recherches, de nombreux clinkers sulfoalumineux ont été décrits. On peut par exemple citer la demande de brevet internationale WO-A-2006/018569 décrivant des clinkers sulfoalumineux bélitiques comprenant 5 à 25% de phase aluminoferrite calcique d'une composition correspondant à la formule générale C₂AF₍₁₋ₓ₎, avec x compris entre 0,2 et 0,8 ; 15 à 35% de phase sulfoaluminate de calcium « yee' limite » (C₄A₃$) ; 40 à 75% de bélite (C₂S) ; et de 0,01 à 10% d'une ou plusieurs phases mineures. Comme mentionné dans cette demande de brevet, de tels clinkers contiennent, en comparaison avec la phase alite (C₃S), la principale composante des ciments Portland, une quantité plus élevée de phase bélite (C₂S), ce qui est tout à fait bénéfique, puisque cela conduit à la réduction des émissions industrielles de CO₂ et de la consommation énergétique. D'autre part, la bélite contribue au développement de la résistance à long terme du ciment sulfo-alumineux bélitique. Cependant, la plupart des clinkers décrits dans cette demande de brevet contiennent du bore, ce qui présente un désavantage économique notable compte-tenu du prix et de la rareté de ce constituant.

D'autre part, les clinkers décrits dans la demande de brevet internationale WO-A-2006/018569 ne font pas mention de la présence d'une phase sulfoaluminate de calcium dopé en fer qui permettrait une amélioration de la prise et de la résistance mécanique à la compression à court, moyen et long terme du ciment préparé à partir du clinker.

Jusqu'à présent, les problématiques de collage des matériaux aux parois du four au moment de la cuisson des crus, principalement dus à la présence de fer dans les crus utilisés pour la préparation, ont empêché le développement des clinkers sulfoalumineux riches en fer.

L'utilisation d'alkanolamines telles que par exemple la diéthanolamine et la triéthanolamine comme accélérateurs afin de raccourcir le temps de prise et d'augmenter les résistances mécaniques à la compression mesurées à 1 jour est parfaitement connue pour les bétons contenant du ciment Portland. La demande de brevet internationale WO-A-2009/118652 décrit l'adjonction de composés alkanolamines aux clinkers sulfoalumineux bélitiques décrits dans la demande de brevet internationale WO-A-2006/018569 afin d'améliorer les propriétés mécaniques à la compression à long terme (plus de 30 jours), préférentiellement à plus de 60 jours, et plus préférentiellement à plus de 90 jours, du ciment préparé à partir du clinker. Cependant, dans ce cas l'usage d'alkanolamine ne fait qu'améliorer artificiellement les performances intrinsèques faibles d'un clinker donné, tandis qu'une minéralogie adaptée du clinker obtenue à partir d'un choix judicieux de la nature et proportion des matières premières utilisées pour la cuisson permet l'obtention de propriétés mécaniques satisfaisantes sans avoir recours à un tel additif organique.

Le document FR 2 940 275 A1 est considéré comme l'état de la technique le plus proche de la présente invention et décrit un clinker BCSAF contenant 10 - 30% de phase sulfoaluminate de calcium "yee'limite" C₄A₃$. Ce document ne fait aucune mention ni suggestion d'un possible dopage en fer de la phase sulphoaluminate de calcium "yee'limite".

FR 2 940 274 A1 décrit aussi un clinker BCSAF contenant 10 - 30% de phase sulfoaluminate de calcium "yee'limite" C₄A₃$. Ce document ne fait aucune mention ni suggestion d'un possible dopage en fer de la phase sulphoaluminate de calcium "yee'limite".

Il y a donc un besoin de trouver de nouveaux clinkers pouvant être préparés à des températures largement inférieures à 1425°C, réduisant ainsi fortement les émissions de CO₂ lors de leur préparation comparé au clinkers dits « Portland », tout en maintenant voire en améliorant les propriétés mécaniques des ciments et bétons préparés à partir de ces clinkers en comparaison de ceux préparés à partir d'un clinker Portland.

Il a maintenant été trouvé de façon toute à fait surprenante que le dopage en fer de certains clinkers sulfo-bélitique préparés dans des conditions de cuisson spécifiques permettait de résoudre ces différentes problématiques, sans pour autant que l'on observe des phénomènes de collage lors de la cuisson des crus. De plus, ces clinkers ne nécessitent pas la présence de bore ni l'adjonction d'additifs pour améliorer la qualité des ciments et bétons préparés.

Il a en effet été observé, de façon toute à fait surprenante, que de tels clinkers préparés selon le procédé de l'invention permettaient la préparation de ciments présentant une réactivité hydraulique et une résistance accrue en comparaison des ciments préparés à partir des clinkers décrits dans la demande de brevet internationale WO 2006/018569, tout en permettant de réduire les émissions de CO₂ de près de 35% lors de leur préparation en comparaison de clinkers de type Portland.

La présente invention a donc tout d'abord pour objet un clinker sulfo-bélitique comprenant comme composition phasique, par rapport au poids total du clinker :
- de 5 à 60 % de phase sulfoaluminate de calcium dopé en fer correspondant à la formule C₄AₓFy$_{z} avec
   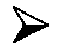 x variant de 2 à 3,
   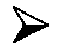 y variant de 0 à 0.5 et y étant différent de 0,
   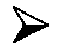 et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- de 20 à 70% de phase bélite C₂S ;
- moins de 10% de phase C₁₁S₄B.

Le clinker selon la présente invention permet la préparation de ciments présentant une réactivité hydraulique et une résistance accrue en comparaison des ciments décrits dans l'art antérieur et les ciments Portland. De plus, le clinker selon la présente invention peut être préparé à des températures ne dépassant pas 1350°C, ce qui limite d'une part les émissions de CO₂, et d'autre part la destruction de phase sulfoaluminate de calcium dopé en fer. Enfin, les clinkers selon l'invention peuvent être préparés à partir de crus ayant une teneur en fer élevée sans pour autant observer d'augmentation des phénomènes de collage. Cette caractéristique des clinkers selon la présente invention permet l'utilisation d'une gamme plus large de matériaux pour le préparer, tels que par exemple de la bauxite riche en fer.

Dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂ ; et
- $ représente SO₃.

Ainsi, par exemple, la phase aluminoferrite calcique d'une composition correspondant à la formule générale C₆A_{x'}Fy_{'} correspond en réalité à une phase (CaO)₆.(Al₂O₃)_{x'}(Fe₂O₃)_{y}. De plus, dans le cadre de la présente invention, les proportions exprimées en % correspondent à des pourcentages massiques par rapport au poids total de l'entité (clinker ou liant hydraulique) considérée.

De préférence, la présente invention a pour objet un clinker sulfo-bélitique dans lequel les caractéristiques suivantes sont choisies seules ou en combinaison :
- le clinker contient de 10 à 50% de phase sulfoaluminate de calcium dopé en fer C₄AₓF_{y}$_{z} ;
- x varie de 2.1 à 2.9, de préférence de 2.2 à 2.8;
- y varie de 0.05 à 0.5, de préférence 0.1 à 0.5 ;
- la phase sulfoaluminate de calcium contient de l'alumine, du fer et du soufre avec x variant de 2.1 à 2.9, de préférence de 2.2 à 2.8, y variant de 0.05 à 0.5, de préférence de 0.1 à 0.5, et z variant de 0.8 à 1.2 ;
- le clinker contient de 0 à 20% de phase aluminoferrite calcique C₆A_{x'}F_{y'};
- x' varie de 0.65 à 1.3 ;
- y' varie de 1.5 à 2.5 ;
- la phase aluminoferrite calcique C₆A_{x'}P_{y'} contient de l'alumine et du fer avec x' variant de 0.65 à 1.3 et y' variant de 1.5 à 2.5 ;
- le clinker contient de 30 à 55% de phase bélite C₂S; et/ou
- le clinker contient moins 5% de phase C₁₁S₄B, de préférence encore moins de 2% de phase de phase C₁₁S₄B. De façon toute à fait préférée, le clinker est exempt de phase C₁₁S₄B.

Préférentiellement, les clinkers selon l'invention sont totalement exempts de bore additionné de manière intentionnelle

D'autres phases minoritaires peuvent apparaître dans la constitution du clinker. Ces phases mineures peuvent être constituées de la chaux libre CaO1, de l'anhydrite C$, de la Géhlénite C₂AS, de la Mayenite C₁₂A₇, de la Périclase MgO, de la Perovskite CT, C₃FT, C₄FT2. De façon préférée, le clinker selon l'invention contient :
- moins de 3% de CaO1, de préférence moins de 1% de CaOl ;
- moins de 5% de C$, de préférence moins de 2% de C$ ; et/ou
- moins de 10% de C₂AS, de préférence moins de 5% de C₂AS.

Le clinker selon la présente invention doit être préparé dans des conditions précises afin d'éviter tout phénomène de collage au cours de la cuisson. Ainsi, la présente invention a également pour objet un procédé de préparation d'un clinker tel que décrit précédemment, comprenant les étapes suivantes :
1) préparation d'un cru à partir des matières premières suivantes :
   - de 0.1 à 40% de bauxite, marnes, boues rouges et/ou de toutes autres roches sédimentaires, métamorphiques ou magmatiques ou dérivés minéraux de l'industrie à forte teneur en aluminium ;
   - de 0.1 à 12% de gypse, borogypse, phosphogypse, desulfogypse, anhydrite et/ou hémihydrate ;
   - de 0.1 à 65% de calcaire et/ou de toutes autres roches sédimentaires, métamorphiques ou magmatiques ou dérivés minéraux de l'industrie à forte teneur en calcium ;
   - de 0 à 12% de quartz, silice, silice expansée, fumée de silice ou de toutes autres roches sédimentaires, métamorphiques ou magmatiques ou dérivés minéraux de l'industrie à forte teneur en silicium ; et
   - de 0 à 12% d'oxyde de fer et/ou sulfate de fer et/ou sulfures de fer et/ou toutes matières minérales naturelles ou synthétiques riches en fer et/ou en soufre ;
2) mélange (éventuellement par cobroyage) des matières premières,
3) cuisson du mélange des matières premières à une température T2 allant de 1150°C à 1300°C selon les étapes suivantes :
   a) passage de la température ambiante à une température allant de 800°C à 1200°C sur une période de temps t1 allant de 20 à 500 minutes,
   b) montée en température jusqu'à la température finale souhaitée T2, sur une période de temps t2 allant de 15 à 60 minutes,
   c) maintien de la température à T2, sur une période de temps t3 allant de 0 à 60 minutes,
   d) diminution de la température de T2 à T3, T3 étant supérieure ou égale à 1100°C, sur une période de temps t4 allant de 0 à 15 minutes,
   e) trempe et refroidissement rapide du clinker jusqu'à la température ambiante, sur une période de temps t5 allant de 5 à 60 minutes.

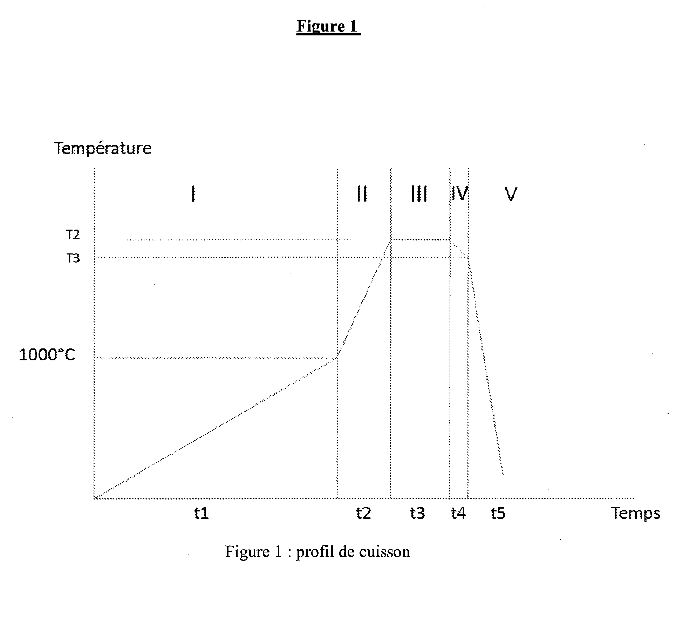

Pour plus de clarté, le profil de température suivi pour procéder à la cuisson du cru selon le procédé de l'invention est illustré par la Figure 1.

De préférence, l'étape de cuisson du procédé selon la présente invention est conduite à une température T2 allant de 1250°C à 1300°C.

De façon préférée, l'étape de cuisson du procédé selon la présente invention est conduite à une température T2, dans les conditions suivantes :
a) passage de la température ambiante à 1000°C sur une période de temps t1 allant de 90 min à 420 minutes,
b) montée en température jusqu'à la température finale souhaitée T2, sur une période de temps t2 allant de 25 à 45 minutes,
c) maintien de la température à T2, sur une période de temps t3 allant de 0 et 30 minutes,
d) diminution de la température de T2 à 1200°C, sur une période de temps t4 allant de 5 à10 minutes,
e) trempe et refroidissement rapide du clinker jusqu'à la température ambiante en 10 minutes.

Le clinker selon la présente invention peut être préparé à partir de différentes matières premières telles que les boues rouges, la bauxite, le calcaire, les marnes, le gypse ou toute autre source de sulfate de calcium, la silice, les oxydes de fer, les sulfate de fer et les sulfures de fer naturels ou leurs sous-produits respectifs, et toute matière minérale capable d'apporter CaO, Al₂O₃, Fe₂O₃, SiO₂ et SO₃ en quantités adéquates ou en mélanges.

La qualité de la cuisson, et notamment les respects en tout point d'une atmosphère oxydante et des températures maximum de 1350°C, est fondamentale. La préparation des clinkers selon l'invention se fera donc dans un four permettant le respect de ces conditions. A titre d'exemple de fours appropriés pour préparer les clinkers selon la présente invention, on peut citer le four décrit dans la demande de brevet internationale publiée sous le numéro WO-A-2009/122065. Le four décrit dans cette demande de brevet est particulièrement approprié pour la préparation de clinkers selon l'invention car il contribue à respecter le profil thermique précédemment décrit.

Le clinker selon la présente invention peut être utilisé pour préparer un liant hydraulique, par exemple du ciment, par broyage et éventuel ajout de gypse, d'anhydrite ou d'hémihydrate. La présente invention concerne donc également un liant hydraulique comprenant un clinker tel que décrit précédemment sous forme broyé. Préférentiellement, le liant hydraulique selon la présente invention comprend également un ajout de gypse, d'anhydrite ou d'hémihydrate, dans des proportions pouvant aller jusqu'à 20%.

Le liant hydraulique selon la présente invention peut également comprendre des ajouts du même type que ceux utilisés pour le ciment Portland tels que par exemple le calcaire, les pouzzolanes naturelles et artificielles, le laitier de haut fourneau, les cendres volantes de foyers au charbon et les fumées de silice. Cet ajout est réalisé par mélange avant ou après le broyage des constituants, par mélange des poudres ou par cobroyage. La prise du liant est alors la résultante de l'activation des ajouts par le clinker. En conséquence l'économie de CO₂ par rapport à un ciment de type CEM I (suivant la norme EN 197-1) peut être considérable, allant jusqu'à 90% de réduction des émissions de CO₂ selon la teneur en ajout.

De plus, pour améliorer les performances mécaniques du liant hydraulique, on pourra ajouter de 1 à 5% de calcaire (CaCO₃) finement broyé ou « filler ». L'ajout de « filler » peut être réalisé par mélange avant ou après le broyage des constituants, par mélange des poudres ou par cobroyage.

Enfin, la présente invention concerne également les différents produits préparés à partir du liant décrit précédemment, en particulier les coulis, les bétons et les mortiers. Ainsi, la présente invention a également pour objet un coulis, un béton ou un mortier comprenant le liant hydraulique tel que décrit précédemment.

La présente invention peut être illustrée de façon non limitative par les exemples suivants.

### Exemple 1

Un cru a été réalisé avec les matières premières dont les analyses chimiques sont rapportées dans le tableau suivant :

| **Éléments** | **Bauxite** | **Gypse** | **Calcaire** | **Silice** | **Sulfate de Fer** | **Oxyde de Fer** |
|---|---|---|---|---|---|---|
| **SiO₂ (en %)** | 6.39 | 0.41 | 0.19 | 98.25 | | |
| **Al₂O₃ (en %)** | 53.36 | 0.21 | 0.06 | 0.32 | | |
| **CaO (en %)** | 0.76 | 31.51 | 54.65 | 0.12 | | |
| **MgO (en %)** | 0.04 | 0.02 | 0.74 | 0.09 | | |
| **Fe₂O₃ (en %)** | 9.33 | 0.06 | 0.3 | 0 | 28.74 | 100 |
| **TiO₂ (en %)** | 2.65 | 0.05 | 0.01 | 0 | | |
| **K₂O (en %)** | 0.01 | 0.04 | 0.04 | 0 | | |
| **Na₂O (en %)** | 0 | 0.02 | 0 | 0.67 | | |
| **P₂O₅ (en %)** | 0.06 | 0.72 | 0.02 | 0 | | |
| **Mn₂O₃ (en %)** | 0 | 0 | 0.01 | 0 | | |
| **SO₃ (en %)** | 0.18 | 44.64 | 0.06 | 0 | 28.83 | |
| **Autres non volatils (en %)** | 0.01 | 1.17 | 0.074 | 0 | | |
| | | | | | | |
| **Perte au feu (en %)** | 26.51 | 20.32 | 43.28 | 0.19 | 42.44 | |
| **Total** | **99.31** | **99.17** | **99.43** | **99.65** | **100** | **100** |

On entend par perte au feu la perte de masse constatée après cuisson à 950°C.

Bauxite : Bauxite Weipa origine Australie.

Gypse : sous produit industriel issu de la fabrication d'acide phosphorique.

Sulfate de fer technique ou industriel.

Sulfure de fer issu de l'extraction minière, de formule FeS₂ contenant de 44 à 48% de Fe.

Un mélange intime a été effectué dans les proportions suivantes (tout passant à 100 µm) :

| | **Bauxite** | **Gypse** | **Calcaire** | **Silice** | **Sulfure de fer** | **Oxyde de fer** |
|---|---|---|---|---|---|---|
| % | 22.11 | 2.36 | 60.56 | 8.19 | 2.36 | 4.42 |

Les chimies prévisionnelles et réellement obtenus du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 9.59 | 10.05 | 13.84 | 14.16 |
| **Al₂O₃ (en %)** | 11.87 | 12.16 | 17.14 | 17.63 |
| **CaO (en %)** | 34.02 | 33.87 | 49.12 | 48.63 |
| **MgO (en %)** | 0.47 | 0.49 | 0.67 | 0.74 |
| **Fe₂O₃ (en %)** | 8.24 | 7.96 | 11.89 | 11.35 |
| **TiO₂ (en %)** | 0.59 | 0.60 | 0.86 | 0.99 |
| **K₂O (en %)** | 0.03 | 0.03 | 0.04 | 0.06 |
| **Na₂O (en %)** | 0.06 | 0.06 | 0.08 | 0.03 |
| **P₂O₅ (en %)** | 0.04 | 0.06 | 0.06 | 0.07 |
| **Mn₂O₃ (en %)** | 0.01 | 0.02 | 0.01 | 0.02 |
| **SO₃ (en %)** | 4.28 | 4.55 | 6.17 | 5.64 |
| **Autres non volatils (en %)** | 0.07 | 0.06 | 0.11 | 0.08 |
| | | | | |
| **Perte au feu (en %)** | 30.21 | 29.9 | 0 | 0.59 |
| **Total** | **99.46** | **99.81** | **100** | **99.99** |

Une cuisson dans un four à passage tel que celui décrit dans la demande de brevet WO-A-2009/122065, à été réalisée à 1280°C pendant 20 minutes.

Le mélange cru est introduit dans la tour de préchauffage et chauffé depuis la température ambiante jusqu'à 1050°C en 410 minutes au fur et à mesure de sa descente dans la tour, par les gaz remontant à contre-courant dans celle-ci.

La matière est ensuite admise dans la section horizontale du four à passage via un extracteur, et amenée jusqu'à la zone de clinkérisation (1280°C) sur une période de 30 minutes et la température est maintenue pendant 20 minutes.

En sortie de la zone de clinkérisation, la température diminue jusqu'à 1200°C sur une période de 6 minutes.

Enfin, le clinker est envoyé dans le refroidisseur où il subit une trempe rapide pour atteindre la température ambiante en 10 minutes.

Les phases cristallographiques obtenues sont les suivantes :

| **Composition minéralogique** | **%** |
|---|---|
| C₄AₓF_{y}$_{z} | 40.48 |
| avec x=2.34, y=0.27 et z=1.03 | |
| C₆A_{x'}F_{y'} | 10.68 |
| avec x'=1 et y'=2.09 | |
| C₂S α'h | 11.27 |
| C₂S β | 28.98 |
| Autres phases | 8.59 |

### Exemple 2

En utilisant les matières premières identiques à celles mentionnées dans l'exemple 1, un mélange intime a été effectué dans les proportions suivantes (tout passant à 100 µm) :

| | **Bauxite** | **Gypse** | **Calcaire** | **Silice** | **Sulfate de fer** | **Oxyde de fer** |
|---|---|---|---|---|---|---|
| % | 21.11 | 5.46 | 56.0 | 7.82 | 5.46 | 4.17 |

Les chimies prévisionnelles et réellement obtenus du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 9.16 | 9.61 | 13.83 | 14.33 |
| **Al₂O₃ (en %)** | 11.33 | 11.52 | 17.12 | 17.1 |
| **CaO (en %)** | 32.49 | 32.8 | 49.09 | 48.88 |
| **MgO (en %)** | 0.43 | 0.41 | 0.65 | 0.61 |
| **Fe₂O₃ (en %)** | 7.87 | 7.81 | 11.9 | 11.6 |
| **TiO₂ (en %)** | 0.57 | 0.64 | 0.86 | 0.95 |
| **K₂O (en %)** | 0.03 | 0.01 | 0.04 | 0.01 |
| **Na₂O (en %)** | 0.05 | 0.01 | 0.08 | 0.01 |
| **P₂O₅ (en %)** | 0.06 | 0.06 | 0.09 | 0.09 |
| **Mn₂O₃ (en %)** | 0.01 | 0 | 0.01 | 0.02 |
| **SO₃ (en %)** | 4.08 | 4.35 | 6.17 | 5.89 |
| **Autres non volatils (en %)** | 0.11 | 0.11 | 0.16 | 0.17 |
| | | | | |
| **Perte au feu (en %)** | 33.27 | 32.38 | | 0.5 |
| **Total** | **99.46** | **99.71** | **100** | **100.16** |

Une cuisson dans un four à passage à été réalisée selon les modalités de l'exemple 1.

Les phases cristallographiques obtenues sont les suivantes :

| **Composition minéralogique** | **%** |
|---|---|
| C₄AₓF_{y}$_{z} | 37.74 |
| avec x=2.34, y=0.31 et z=1.08 | |
| C₆A_{x'}F_{y'} | 11.43 |
| avec x'=1.12 et y'=2.11 | |
| C₂S α'h | 14.75 |
| C₂S β | 25.67 |
| Autres phases | 10.41 |

### Exemple 3

En utilisant les matières premières identiques à celles mentionnées dans l'exemple 1, un mélange intime a été effectué dans les proportions suivantes (tout passant à 100 µm) :

| | **Bauxite** | **Gypse** | **Calcaire** | **Silice** | **Sulfate de fer** | **Oxyde de fer** |
|---|---|---|---|---|---|---|
| % | 21.62 | 9.21 | 55.3 | 8.01 | 0 | 5.86 |

Les chimies prévisionnelles et réellement obtenus du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 9.39 | 9.65 | 13.83 | 14.05 |
| **Al₂O₃ (en %)** | 11.61 | 11.74 | 17.11 | 17.09 |
| **CaO (en %)** | 33.3 | 33.42 | 49.06 | 48.48 |
| **MgO (en %)** | 0.43 | 0.22 | 0.63 | 0.33 |
| **Fe₂O₃ (en %)** | 8.05 | 7.96 | 11.86 | 11.51 |
| **TiO₂ (en %)** | 0.58 | 0.65 | 0.86 | 0.94 |
| **K₂O (en %)** | 0.03 | 0.01 | 0.04 | 0.06 |
| **Na₂O (en %)** | 0.06 | 0.02 | 0.08 | 0.03 |
| **P₂O₅ (en %)** | 0.09 | 0.09 | 0.13 | 0.13 |
| **Mn₂O₃ (en %)** | 0.01 | 0 | 0.01 | 0.04 |
| **SO₃ (en %)** | 4.19 | 4.36 | 6.17 | 5.8 |
| **Autres non volatils (en %)** | 0.15 | 0.17 | 0.22 | 0.25 |
| | | | | |
| **Perte au feu (en %)** | 31.55 | 31.34 | | 0.6 |
| **Total** | **99.43** | **99.63** | **100** | **99.31** |

Une cuisson dans un four à passage à été réalisée selon les modalités de l'exemple 1.

Les phases cristallographiques obtenues sont les suivantes :

| **Composition minéralogique** | **%** |
|---|---|
| C₄AₓF_{y}$_{z} | 38.84 |
| avec x=2.41, y=0.32 et z=1.08 | |
| C₆A_{x'}F_{y'} | 14.32 |
| avec x'=1.2 et y'=2.19 | |
| C₂S α'h | 11.45 |
| C₂S β | 29.58 |
| Autres phases | 5.81 |

### Exemple 4

En utilisant les matières premières identiques à celles mentionnées dans l'exemple 1, un mélange intime a été effectué dans les proportions suivantes (tout passant à 100 µm) :

| | **Bauxite** | **Gypse** | **Calcaire** | **Silice** | **Sulfure de fer** | **Oxyde de fer** |
|---|---|---|---|---|---|---|
| % | 26.08 | 6.52 | 56.98 | 9.13 | 1.3 | 0 |

Les chimies prévisionnelles et réellement obtenus du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 10.77 | 11.08 | 15.89 | 16.23 |
| **Al₂O₃ (en %)** | 13.99 | 14.11 | 20.64 | 20.71 |
| **CaO (en %)** | 33.4 | 33.51 | 49.27 | 49.09 |
| **MgO (en %)** | 0.44 | 0.44 | 0.65 | 0.64 |
| **Fe₂O₃ (en %)** | 3.47 | 3.44 | 5.12 | 5.05 |
| **TiO₂ (en %)** | 0.7 | 0.78 | 1.03 | 1.13 |
| **K₂O (en %)** | 0.03 | 0.01 | 0.04 | 0.06 |
| **Na₂O (en %)** | 0.06 | 0.02 | 0.09 | 0.03 |
| **P₂O₅ (en %)** | 0.07 | 0.07 | 0.11 | 0.1 |
| **Mn₂O₃ (en %)** | 0.01 | 0 | 0.01 | 0 |
| **SO₃ (en %)** | 4.73 | 4.91 | 6.97 | 6.65 |
| **Autres non volatils (en %)** | 0.12 | 0.13 | 0.18 | 0.19 |
| | | | | 0.48 |
| **Perte au feu (en %)** | 31.61 | 31.56 | | |
| **Total** | **99.4** | **100.06** | **100** | **100.36** |

Une cuisson dans un four à passage à été réalisée selon les modalités de l'exemple 1.

Les phases cristallographiques obtenues sont les suivantes :

| **Composition minéralogique** | **%** |
|---|---|
| C₄AₓF_{y}$_{z} | 46.94 |
| avec x=2.45, y=0.28 et z=1.09 | |
| C₆A_{x'}F_{y'} | 0 |
| C₂S α'h | 18.31 |
| C₂S β | 25.24 |
| Autres phases | 9.51 |

### Exemple 5

Un cru a été réalisé avec les matières premières dont les analyses chimiques sont rapportées dans le tableau suivant :

| **Éléments** | **Bauxite** | **Gypse** | **Calcaire** |
|---|---|---|---|
| **SiO₂ (en %)** | 21.85 | 0.36 | 0.17 |
| **Al₂O₃ (en %)** | 38.24 | 0.25 | 0.07 |
| **CaO (en %)** | 2.56 | 31.10 | 55.0 |
| **MgO (en %)** | 0.16 | 0.06 | 0.42 |
| **Fe₂O₃ (en %)** | 20.77 | 0.07 | 0.34 |
| **TiO₂ (en %)** | 1.85 | 0.04 | 0.01 |
| **K₂O (en %)** | 0.1 | 0.02 | 0.01 |
| **Na₂O (en %)** | 0.0 | 0.05 | 0.01 |
| **P₂O₅ (en %)** | 0.18 | 0.58 | 0.02 |
| **Mn₂O₃ (en %)** | 0.03 | 0.0 | 0.02 |
| **SO₃ (en %)** | 0.04 | 44.35 | 0.01 |
| **Autres non volatils (en %)** | 0.02 | 0.0 | 0.0 |
| | | | |
| **Perte au feu (en %)** | 13.66 | 20.41 | 43.47 |
| **Total** | **99.47** | **99.32** | **99.55** |

Bauxite : Bauxite origine carrière Sodicapei France.
Gypse : sous produit industriel issu de la fabrication d'acide phosphorique.

Sulfure de fer issu de l'extraction minière, de formule FeS₂ contenant de 42 à 45% de Fe.

Un mélange intime a été effectué dans les proportions suivantes (tout passant à 100 µm) :

| | **Bauxite** | **Gypse** | **Calcaire** | **Sulfure de fer** |
|---|---|---|---|---|
| % | 37.26 | 9.13 | 52.6 | 1.0 |

Les chimies prévisionnelles et réellement obtenus du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 8.34 | 8.67 | 11.82 | 12.20 |
| **Al₂O₃ (en %)** | 14.31 | 14.7 | 20.29 | 20.54 |
| **CaO (en %)** | 32.75 | 33.40 | 46.43 | 46.35 |
| **MgO (en %)** | 0.29 | 0.29 | 0.41 | 0.41 |
| **Fe₂O₃ (en %)** | 8.61 | 8.72 | 12.20 | 11.84 |
| **TiO₂ (en %)** | 0.7 | 0.78 | 0.99 | 1.10 |
| **K₂O (en %)** | 0.05 | 0.07 | 0.07 | 0.09 |
| **Na₂O (en %)** | 0.01 | 0.0 | 0.01 | 0.02 |
| **P₂O₅ (en %)** | 0.13 | 0.13 | 0.19 | 0.18 |
| **Mn₂O₃ (en %)** | 0.02 | 0.02 | 0.03 | 0.03 |
| **SO₃ (en %)** | 5.14 | 5.89 | 7.29 | 6.53 |
| **Autres non volatils (en %)** | 0.19 | 0.16 | 0.27 | 0.23 |
| | | | | |
| **Perte au feu (en %)** | 28.96 | 26.92 | 0 | 0.48 |
| **Total** | **99.5** | **99.93** | **100.0** | **100.01** |

Une cuisson dans un four à passage tel que celui décrit dans la demande de brevet WO-A-2009/122065, à été réalisée à 1300°C pendant 20 minutes.

Les conditions de cuisson sont en tout point similaire à celles décrites dans l'exemple 1 à l'exception de la température dans la zone de clinkérisation qui est de 1300°C

Les phases cristallographiques obtenues sont les suivantes :

| **Composition minéralogique** | **%** |
|---|---|
| C₄AₓF_{y}$_{z} | 42.8 |
| avec x=2.60, y=0.25 et z=1.11 | |
| C₆A_{x'}F_{y'} | 12.7 |
| avec x'=1 et y'=2.32 | |
| C₂S α'h | 6.3 |
| C₂S β | 26.4 |
| Autres phases | 11.8 |

### Exemple 6

Un cru a été réalisé avec les matières premières dont les analyses chimiques sont rapportées dans le tableau suivant :

| **Éléments** | **Bauxite** | **Anhydrite** | **Calcaire** |
|---|---|---|---|
| **SiO₂ (en %)** | 21.16 | 0.04 | 1.42 |
| **Al₂O₃ (en %)** | 41.18 | 0.14 | 0.35 |
| **CaO (en %)** | 2.62 | 42.19 | 54.31 |
| **MgO (en %)** | 0.31 | 0.16 | 0.31 |
| **Fe₂O₃ (en %)** | 18.77 | 0.22 | 0.20 |
| **TiO₂ (en %)** | 2.03 | 0.03 | 0.03 |
| **K₂O (en %)** | 0.24 | 0.01 | 0.08 |
| **Na₂O (en %)** | 0.0 | 0.02 | 0.0 |
| **P₂O₅ (en %)** | 0.19 | 0.04 | 0.01 |
| **Mn₂O₃ (en %)** | 0.05 | 0.0 | 0.01 |
| **SO₃ (en %)** | 0.24 | 54.75 | 0.0 |
| **Autres non volatils (en %)** | 0.02 | 0.0 | 0.047 |
| | | | |
| **Perte au feu (en %)** | 13.42 | 1.99 | 42.76 |
| **Total** | **100.24** | **99.59** | **99.84** |

On entend par perte au feu la perte de masse constatée après cuisson à 950°C.
Bauxite : Bauxite origine carrière Sodicapei France.
Anhydrite : sous produit industriel.
Calcaire : Calcaire de carrière usine St Egrève France

Un mélange intime a été effectué dans les proportions suivantes (tout passant à 100 µm) :

| | **Bauxite** | **Anhydrite** | **Calcaire** |
|---|---|---|---|
| % | 37.78 | 9.56 | 52.65 |

Les chimies prévisionnelles et réellement obtenues du cru et du clinker sont données ci-dessous.

| **Éléments** | **Chimie prévisionnelle du cru** | **Chimie réelle du cru** | **Chimie prévisionnelle du clinker** | **Chimie réelle du clinker** |
|---|---|---|---|---|
| **SiO₂ (en %)** | 8.76 | 8.87 | 12.14 | 12.37 |
| **Al₂O₃ (en %)** | 15.79 | 15.45 | 21.87 | 21.38 |
| **CaO (en %)** | 33.69 | 33.38 | 46.68 | 46.69 |
| **MgO (en %)** | 0.30 | 0.28 | 0.41 | 0.39 |
| **Fe₂O₃ (en %)** | 7.23 | 7.18 | 10.02 | 10.06 |
| **TiO₂ (en %)** | 0.79 | 0.86 | 1.09 | 1.19 |
| **K₂O (en %)** | 0.13 | 0.14 | 0.19 | 0.14 |
| **Na₂O (en %)** | 0.00 | 0.02 | 0.00 | 0.02 |
| **P₂O₅ (en %)** | 0.08 | 0.08 | 0.11 | 0.11 |
| **Mn₂O₃ (en %)** | 0.02 | 0.02 | 0.03 | 0.03 |
| **SO₃ (en %)** | 5.34 | 5.72 | 7.40 | 6.96 |
| **Autres non volatils (en %)** | 0.03 | 0.01 | 0.04 | 0.02 |
| | | | | |
| **Perte au feu (en %)** | 27.83 | 27.65 | 0.0 | 0.33 |
| **Total** | **100.0** | **99.68** | **100.0** | **99.69** |

Une cuisson dans un four à passage tel que celui décrit dans la demande de brevet WO-A-2009/122065, à été réalisée à 1300°C pendant 30 minutes.

Les conditions de cuissons sont en tout point similaire à celles décrites dans l'exemple 1 à l'exception de la température dans la zone de clinkérisation qui est de 1300°C

Les phases cristallographiques obtenues sont les suivantes :

| **Composition minéralogique** | **%** |
|---|---|
| C₄AₓF_{y}$_{z} | 46.2 |
| avec x=2.63, y=0.26 et z=1.04 | |
| C₆A_{x'}F_{y'} | 9.8 |
| avec x'=1 et y'=2.22 | |
| C₂S α'h | 4.5 |
| C₂S β | 31.3 |
| Autres phases | 8.2 |

### Exemple 7

Les clinkers des exemples 1 à 6 ont été broyés avec 10% d'anhydrite de sorte que le refus à 100 µm soit nul. Dans le cas du clinker de l'exemple 5a, un broyage a également été effectué avec 10% d'anhydrite et 3% de filler calcaire.

Les ciments ainsi préparés sont respectivement désignés par ciments 1 à 6 dans ce qui suit (les ciments 1 à 5 étant préparés à partir des clinkers 1 à 5 en les broyant avec 10% d'anhydrite, tandis que le ciment 5a est préparé à partir du clinker de l'exemple 5 cobroyé avec 10% d'anhydrite et 3% de filler calcaire). Le ciment 6 est préparé à partir du clinker de l'exemple 6 par cobroyage avec 10% d'anhydrite.

Le début de prise et la fin de prise sont réalisés selon la norme EN 196-3 sur pâte pure ciment avec recherche du E/C par mesure de la consistance grâce à l'appareil de Vicat.

A partir des ciments 1 à 6, on réalise des mortiers selon la norme EN196-1 dont la composition est la suivante :
- 450g de ciment ;
- 1350g de sable normalisé ;
- 225g d'eau.

Dans le cas du ciment 4, on réalise également des mortiers selon la norme EN196-1, mais dont les teneurs en eau sont variables. La composition de ces mortiers est la suivante :
- 450g de ciment ;
- 1350g de sable normalisé ;
- 189g ou 202.5g d'eau.

La résistance mécanique des mortiers est mesurée sur des éprouvettes de mortiers prismatiques 4x4x16 cm3 préparés à 20°C en utilisant des moules métalliques et démoulées à 24h. Les éprouvettes sont conservées ensuite dans l'eau à 20°C jusqu'à l'échéance de mesure.

La résistance des échantillons obtenus est testée selon la norme EN196-1.

Les résultats sont présentés dans les 3 tableaux suivants :

| **Échantillon** | **Ciment 1** | **Ciment 2** | **Ciment 3** | **Ciment 4** | **Ciment 5** | **Ciment 5a** | **Ciment 6** |
|---|---|---|---|---|---|---|---|
| **Médian (µm)** | 13.5 | 12.9 | 12.9 | 20.8 | 13.5 | 13.6 | 13.4 |

| | | **Ciment 1** | **Ciment 2** | **Ciment 3** | **Ciment 4** | **Ciment 5** | **Ciment 5a** | **Ciment 6** |
|---|---|---|---|---|---|---|---|---|
| **Mesures de prise pâte pure** | **E/C** | 0.27 | 0.24 | 0.27 | 0.27 | 0.31 | 0.29 | 0.28 |
| | **Début de prise (mn)** | 30 | 30 | 30 | 50 | 20 | 18 | 10 |
| | **Fin de prise (mn)** | 130 | 75 | 165 | 95 | 45 | 45 | 21 |

| **Échantillon** | **Mesures de résistances en mortier** | | | | | | | |
|---|---|---|---|---|---|---|---|---|
| | **E/C** | **Résistances en compression (MPa)** | | | | | | |
| | | **1 jour** | **2 jours** | **3 jours** | **7 jours** | **28 jours** | **90 jours** | |
| **Ciment 1** | 0.5 | / | 21.5 | / | 31.0 | 44.5 | / | |
| **Ciment 2** | 0.5 | / | 25.0 | / | 25.0 | 41.3 | / | |
| **Ciment 3** | 0.5 | / | 27.3 | / | 30.9 | 40.0 | / | |
| **Ciment 4** | 0.5 | / | 33.4 | / | 45.0 | 45.0 | / | |
| **Ciment 4** | 0.45 | / | 41.7 | / | 52.5 | 57.6 | / | |
| **Ciment 4** | 0.42 | / | 44.0 | / | 58.3 | 60.0 | / | |
| **Ciment 5** | 0.5 | 21.4 | / | 38.8 | 41.1 | 42.8 | 45.4 | |
| **Ciment 5a** | 0.5 | 23.4 | / | 39.7 | 42.9 | 48.1 | 50.5 | |
| **Ciment 6** | 0.5 | 24.82 | 29.02 | / | 33.66 | 37.5 | / | |

Les ciments 1 à 6 présentent une montée en résistance rapide, et des résistances à 28 jours appréciables.

Les résultats obtenus à partir du ciment 4 montrent clairement que les résistances sont d'autant plus élevées que le rapport eau/ciment diminue.

Les résultats obtenus pour les ciments 5 et 5a montrent clairement l'influence de l'addition de filler sur les résistances à long terme.

De façon générale, les résultats obtenus mettent en évidence que les performances des ciments préparés à partir des clinkers de l'invention sont au moins équivalentes à celles des ciments Portland selon la norme EN 197-1 en vigueur.

## Revendications

1. Clinker sulfo-bélitique comprenant comme composition phasique, par rapport au poids total du clinker :
- de 5 à 60 % de phase sulfoaluminate de calcium dopé en fer correspondant à la formule C₄AₓF_{y}$_{z} avec
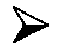 x variant de 2 à 3,
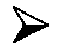 y variant de 0 à 0.5 et y étant différent de 0,
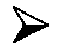 et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- de 20 à 70% de phase bélite C₂S ;
- moins de 10% de phase C₁₁S₄B.

2. Clinker selon la revendication 1, **caractérisé en ce qu'**il contient de 10 à 50% de phase sulfoaluminate de calcium dopé en fer C₄AₓF_{y}$_{z}

3. Clinker selon la revendication 1 ou 2, **caractérisé en ce que** x varie de 2.1 à 2.9 et/ou y varie de 0.05 à 0.5

4. Clinker selon l'une des revendications 1 à 3, **caractérisé en ce qu'**il contient de 0 à 20% de phase aluminoferrite calcique C₆A_{x'}F_{y'}.

5. Clinker selon l'une des revendications 1 à 4, **caractérisé en ce que** x' varie de 0.65 à 1.3 et/ou y' varie de 1.5 à 2.5

6. Clinker selon l'une des revendications 1 à 5, **caractérisé en ce qu'**il contient de 30 à 55% de phase bélite C₂S.

7. Clinker selon l'une des revendications 1 à 6, **caractérisé en ce qu'**il contient moins de 5% de phase C₁₁S₄B.

8. Clinker selon l'une des revendications 1 à 7, **caractérisé en ce qu'**il est totalement exempt de bore additionné de manière intentionnelle.

9. Clinker selon l'une des revendications 1 à 8, **caractérisé en ce qu'**il contient moins de 3% de CaOl.

10. Clinker selon l'une des revendications 1 à 9, **caractérisé en ce qu'**il contient moins de 5% de C$.

11. Clinker selon l'une des revendications 1 à 10, **caractérisé en ce qu'**il contient moins de 10% de C₂AS.

12. Procédé de préparation d'un clinker selon l'une des revendications 1 à 11 comprenant les étapes suivantes :
1) préparation d'un cru à partir des matières premières suivantes :
- de 0.1 à 40% de bauxite, marnes, boues rouges ou de toutes autres roches sédimentaires, métamorphiques ou magmatiques ou dérivés minéraux de l'industrie à forte teneur en aluminium ;
- de 0.1 à 12% de gypse, borogypse, phosphogypse, desulfogypse, anhydrite ou hémihydrate ;
- de 0.1 à 65% de calcaire ou de toutes autres roches sédimentaires, métamorphiques ou magmatiques ou dérivés minéraux de l'industrie à forte teneur en calcium ;
- de 0 à 12% de quartz, silice, silice expansée, fumée de silice ou de toutes autres roches sédimentaires, métamorphiques ou magmatiques ou dérivés minéraux de l'industrie à forte teneur en silicium ; et
- de 0 à 12% d'oxyde de fer et/ou sulfate de fer et/ou sulfures de fer et/ou toutes matières minérales naturelles ou synthétiques riches en fer et/ou en soufre ;
2) mélange des matières premières,
3) cuisson du mélange des matières premières à une température T2 allant de 1150°C à 1300°C selon les étapes suivantes :
a) passage de la température ambiante à une température allant de 800°C à 1200°C sur une période de temps t1 allant de 20 à 500 minutes,
b) montée en température jusqu'à la température finale souhaitée T2, sur une période de temps t2 allant de 15 à 60 minutes,
c) maintien de la température à T2, sur une période de temps t3 allant de 0 à 60 minutes,
d) diminution de la température de T2 à T3, T3 étant supérieure ou égale à 1100°C, sur une période de temps t4 allant de 0 à 15 minutes,
e) trempe et refroidissement rapide du clinker jusqu'à la température ambiante, sur une période de temps t5 allant de 5 à 60 minutes.

13. Procédé selon la revendication 12, **caractérisé en ce que** la cuisson du clinker est effectuée à une température T2 allant de 1250°C à 1300°C.

14. Liant hydraulique comprenant un clinker selon l'une quelconque des revendications 1 à 11.

15. Coulis comprenant un liant hydraulique selon la revendication 14.

16. Béton comprenant un liant hydraulique selon la revendication 14.

17. Mortier comprenant un liant hydraulique selon la revendication 14.

## Patentansprüche

1. Sulfoaluminat-Belit-Klinker, umfassend als phasische Zusammensetzung mit Bezug auf das Gesamtgewicht des Klinkers:
- von 5 bis 60 % Kalzium-Sulfoaluminat-Phase, dotiert mit Eisen, entsprechend der Formel C₄AₓF_{y}$_{z}, wobei
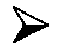 x von 2 bis 3 variiert,
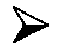 y von 0 bis 0,5 variiert und y verschieden von 0 ist,
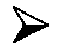 und z von 0,8 bis 1,2 variiert,
- von 0 bis 25 % Kalziumaluminoferrit-Phase einer Zusammensetzung, die der allgemeinen Formel C₆A_{x,}F_{y,} entspricht, wobei x' von 0 bis 1,5 variiert und y' von 0,5 bis 3 variiert;
- und von 20 bis 70 % Belit C₂S-Phase ;
- weniger als 10 % C₁₁S₄B-Phase.

2. Klinker nach Anspruch 1, **dadurch gekennzeichnet, dass** er von 10 bis 50 % Kalzium-Sulfoaluminat-Phase, dotiert mit Eisen C₄AₓF_{y}$_{z}, umfasst.

3. Klinker nach Anspruch 1 oder 2, **dadurch gekennzeichnet, dass** x von 2,1 bis 2,9 variiert und/oder y von 0,05 bis 0,5 variiert.

4. Klinker nach einem der Ansprüche 1 bis 3, **dadurch gekennzeichnet, dass** er von 0 bis 20 % Kalziumaluminoferrit-Phase C₆A_{x,}F_{y} umfasst.

5. Klinker nach einem der Ansprüche 1 bis 4, **dadurch gekennzeichnet, dass** x' von 0,65 bis 1,3 variiert und/oder y' von 1,5 bis 2,5 variiert.

6. Klinker nach einem der Ansprüche 1 bis 5, **dadurch gekennzeichnet, dass** er von 30 bis 55 % Belit C₂S-Phase enthält.

7. Klinker nach einem der Ansprüche 1 bis 6, **dadurch gekennzeichnet, dass** er weniger als 5 % C₁₁S₄B-Phase enthält.

8. Klinker nach einem der Ansprüche 1 bis 7, **dadurch gekennzeichnet, dass** er vollständig frei von auf absichtliche Weise zugegebenem Bor ist.

9. Klinker nach einem der Ansprüche 1 bis 8, **dadurch gekennzeichnet, dass** er weniger als 3 % CaOl enthält.

10. Klinker nach einem der Ansprüche 1 bis 9, **dadurch gekennzeichnet, dass** er weniger als 5 % C$ enthält.

11. Klinker nach einem der Ansprüche 1 bis 10, **dadurch gekennzeichnet, dass** er weniger als 10 % C₂AS enthält.

12. Verfahren zur Zubereitung eines Klinkers nach einem der Ansprüche 1 bis 11, .umfassend die folgenden Schritte:
1) Zubereiten einer Rohform auf der Grundlage der folgenden Rohmaterialien:
- von 0,1 bis 40 % Bauxit,. Mergel, Rotschlämme oder alle anderen sedimentären, metamorphen oder magmatischen Gesteine oder mineralische Derivate der Industrie mit hohem Aluminiumgehalt,
- de 0,1 bis 12 % Gips, Borgips, Phosphogips, Desulfogips, Anhydrit oder Halbhydrat;
- von 0,1 bis 65 % Kalkstein oder alle anderen sedimentären, metamorphen oder magmatischen Gesteine, oder mineralische Derivate der Industrie mit hohem Aluminiumgehalt;
- von 0 bis 12 % Quartz, Siliziumoxid, expandiertes Siliziumoxid, Silikastaub oder alle anderen sedimentären, metamorphen oder magmatischen Gesteine oder mineralische Derivate der Industrie mit hohem Siliziumgehalt; und
- von 0 bis 12 % Eisenoxid und/oder Eisensulfat und/oder Eisensulfite und/oder alle natürlichen oder synthetischen mineralischen Materialien, die reich an Eisen und/oder Schwefel sind;
2) Mischen der Rohmaterialien,
3) Brennen der Mischung der Rohmaterialien bei einer Temperatur T2, die von 1150 °C bis 1300 °C reicht, gemäß den folgenden Schritten:
a) Übergang von der Raumtemperatur zu einer Temperatur, die von 800 °C bis 1200 °C reicht, .in einem Zeitraum t1, der von 20 bis 500 Minuten reicht.
b) Anstieg der Temperatur bis zur endgültigen gewünschten Temperatur T2 in einem Zeitraum t2, der von 15 bis 60 Minuten reicht,
c) Aufrechterhaltung der Temperatur T2 in einem Zeitraum t3, der von 0 bis 60 Minuten reicht,
d) Verringerung der Temperatur von T2 bis T3, .wobei T3 höher oder gleich 1100 °C ist, in einem Zeitraum t4, der von 0 bis 15 Minuten reicht.
e) schnelles Aushärten und Abkühlen des Klinkers bis auf die Raumtemperatur in einem Zeitraum t5, der von 5 bis 60 Minuten reicht.

13. Verfahren nach Anspruch 12, **dadurch gekennzeichnet, dass** das Brennen des Klinkers bei einer Temperatur T2 erfolgt, die von 1250 °C bis 1300 °C reicht.

14. Hydraulisches Bindemittel, umfassend einen Klinker nach einem der Ansprüche 1 bis 11.

15. Aufschlämmung, umfassend ein hydraulisches Bindemittel nach Anspruch 14.

16. Beton, umfassend ein hydraulisches Bindemittel nach Anspruch 14.

17. Mauermörtel, umfassend ein hydraulisches Bindemittel nach Anspruch 14.

## Claims

1. A sulfobelite clinker comprising as phase composition, with respect to the total weight of the clinker:
- from 5 to 60% of iron-doped calcium sulfoaluminate phase corresponding to the formula C₄AₓF_{y}$_{z} with
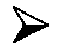 x varying from 2 to 3,
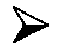 y varying from 0 to 0.5 and y being different from 0,
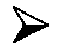 and z varying from 0.8 to 1.2;
- from 0 to 25% of calcium aluminoferrite phase of a composition corresponding to the general formula C₆A_{X'}F_{y'}, with x' varying from 0 to 1.5 and y' varying from 0.5 to 3; and
- from 20 to 70% of belite phase C₂S;
- less than 10% of C₁₁S₄B phase.

2. The clinker according to claim 1, **characterized in that** it contains from 10 to 50% of iron-doped calcium sulfoaluminate C₄AₓF_{y}$_{z} phase.

3. The clinker according to claim 1 or 2, **characterized in that** x varies from 2.1 to 2.9 and/or y varies from 0.05 to 0.5.

4. The clinker according to any of claims 1 to 3, **characterized in that** it contains from 0 to 20% of calcium aluminoferrite C₆A_{X'}F_{y'} phase.

5. The clinker according to any of claims 1 to 4, **characterized in that** x' varies from 0.65 to 1.3 and/or y' varies from 1.5 to 2.5.

6. The clinker according to any of claims 1 to 5, **characterized in that** it contains from 30 to 55% of belite phase C₂S.

7. The clinker according to any of claims 1 to 6, **characterized in that** it contains less than 5% of C₁₁S₄B phase.

8. The clinker according to any of claims 1 to 7, **characterized in that** it is totally free from intentionally added boron.

9. The clinker according to any of claims 1 to 8, **characterized in that** it contains less than 3% of CaO1.

10. The clinker according to any of claims 1 to 9, **characterized in that** it contains less than 5% of C$.

11. The clinker according to any of claims 1 to 10, **characterized in that** it contains less than 10% of C₂AS.

12. A method of preparing a clinker according to any of claims 1 to 11 comprising the following steps of:
1) preparing a raw mix from the following raw materials:
- from 0.1 to 40% of bauxite, marl, red muds or any other sedimentary, metamorphic or magmatic rock, or high aluminum content industrial mineral derivatives;
- from 0.1 to 12% of gypsum, borogypsum, phosphogypsum, desulfogypsum, anhydrite or hemi-hydrate;
- from 0.1 to 65% of limestone or any other sedimentary, metamorphic or magmatic rock or high calcium content industrial mineral derivatives;
- from 0 to 12% of quartz, silica, expanded silica, silica fume or any other sedimentary, metamorphic or magmatic rock or high silicon content industrial mineral derivatives; and
- from 0 to 12% of ferric oxide and/or ferrous sulfate and/or iron sulfides and/or any natural or synthetic minerals that are rich in iron and/or sulphur;
2) mixing the raw materials,
3) curing the mixture of raw materials at a temperature T2 ranging from 1150°C to 1300°C according to the following steps of:
a) passing from room temperature to a temperature ranging from 800°C to 1200°C over a period of time t1 ranging from 20 to 500 minutes,
b) raising the temperature up to the required final temperature T2, over a period of time t2 ranging from 15 to 60 minutes,
c) maintaining the temperature at T2, over a period of time t3 ranging from 0 to 60 minutes,
d) lowering the temperature from T2 to T3, T3 being higher than or equal to 1100 °C, over a period of time t4 ranging from 0 to 15 minutes,
e) rapid cooling and quenching of the clinker to room temperature, over a period of time t5 ranging from 5 to 60 minutes.

13. The method according to claim 12, **characterized in that** curing the clinker is carried out at a temperature T2 ranging from 1250°C to 1300 °C.

14. A hydraulic binder comprising a clinker according to any one of claims 1 to 11.

15. A grout comprising a hydraulic binder according to claim 14.

16. A concrete comprising a hydraulic binder according to claim 14.

17. A mortar comprising a hydraulic binder according to claim 14.
